# EUROPEAN PATENT APPLICATION

(11) **EP 4 632 275 A1**
(43) Date of publication of application: **15.10.2025**
(21) Application number: 24914472.6
(22) Date of filing: 19.04.2024
(51) Int. Cl.: F24C 3/12, F24C 3/10

(54) **INTELLIGENT HEATING DEVICE AND COOKING RANGE**

(30) Priority: 12.01.2024 CN 202420082873 U
(71) Applicant: Haohong Electric Technology (Hubei) Co., Ltd., Huanggang, Hubei 438000 (CN)
(72) Inventor: WANG, Min, Huanggang, Hubei 438000 (CN)
(74) Representative: Osterhoff, Utz
(86) International application number: PCT/CN2024/088848
(87) International publication number: WO 2025/148189

(57) **Abstract**

The present application provides an intelligent heating device and an oven. The intelligent heating device includes a gas pipe, a burner and an electronic control component. The burner is connected to the gas pipe. The burner has a heating mode and a heat preservation mode. The electronic control component is configured for detecting a temperature of the burner and automatically controlling gas intake of the burner so that the burner enters the heating mode or the heat preservation mode. The technical solution of the present application aims to enable the burner to automatically maintain the temperature within a set range.

## Description

### CROSS-REFERENCE TO RELATED APPLICATIONS

This application claims priority to Chinese Patent Application No. 202420082873.0, filed on January 12, 2024, and entitled "INTELLIGENT HEATING DEVICE AND OVEN", the entire contents of which are incorporated herein by reference.

### TECHNICAL FIELD

The present application relates to the technical field of ovens, and in particular to an intelligent heating device and an oven.

### BACKGROUND

In daily life, most ovens consume gas to provide temperature for the oven. Currently, the degree of oven combustion needs to be manually controlled. For situations where the burner needs to be maintained at a predetermined temperature, it is difficult to maintain the predetermined temperature because the oven continuously transfers heat to the outside. At this time, people often need to continuously increase the firepower to increase the oven temperature, and then manually reduce the firepower to maintain the burner temperature. Therefore, the burner cannot automatically maintain the temperature.

### SUMMARY

The main purpose of the present application is to provide an intelligent heating device, which aims to enable the burner to automatically maintain the temperature within a set range.

In order to achieve the above purpose, the present application provides an intelligent heating device, including:
a gas pipe;
a burner connected to the gas pipe, wherein the burner has a heating mode and a heat preservation mode; and
an electronic control component for detecting a temperature of the burner and automatically controlling gas intake of the burner so that the burner enters the heating mode or the heat preservation mode.

In an embodiment of the present application, the burner includes:
a heating pipe connected to the gas pipe, the electronic control component being at least partially connected in series to a connection between the heating pipe and the gas pipe to control a flow rate of gas in the heating pipe; and
a heat preservation pipe connected to the gas pipe, the electronic control component being at least partially connected in series to a connection between the heat preservation pipe and the gas pipe to control a flow rate of gas in the heat preservation pipe;
when the heating pipe and the heat preservation pipe start burning simultaneously, the burner enters the heating mode; when only the heat preservation pipe starts burning, the burner enters the heat preservation mode.

In an embodiment of the present application, the electronic control component includes:
a first electronic valve provided at the connection between the gas pipe and the heating pipe to control the flow rate of the gas in the heating pipe;
a second electronic valve provided at the connection between the gas pipe and the heat preservation pipe to control the flow rate of the gas in the heat preservation pipe; and
a temperature sensor for detecting the temperature of the burner, wherein the temperature sensor is electrically connected to the first electronic valve, and the temperature sensor is electrically connected to the second electronic valve.

In an embodiment of the present application, the temperature sensor is provided with a telescopic structure, and the telescopic structure is connected to a sensing end of the temperature sensor to adjust a height of the sensing end of the temperature sensor.

In an embodiment of the present application, the burner is provided with gas holes, the gas holes are distributed on the heating pipe and the heat preservation pipe respectively, part of the gas holes of the heat preservation pipe are opposite to part of the gas holes of the heating pipe, and when gas flows in the heating pipe, the heat preservation pipe automatically ignites the heating pipe.

In an embodiment of the present application, the burner further includes:
an ignition member provided with a through hole, wherein part of the gas holes of the heat preservation pipe are directly opposite to one end of the ignition member, part of the gas holes of the heating pipe are directly opposite to another end of the ignition member, and the gas of the heating pipe is ignited by flame of the heat preservation pipe through the through hole of the ignition member.

In an embodiment of the present application, the electronic control component further includes:
an ignition needle provided on the gas hole of the heat preservation pipe; and
a button electrically connected to the ignition needle so that the ignition needle ignites the gas in the heat preservation pipe.

In an embodiment of the present application, the heating pipe is arranged in a zigzag manner, the heat preservation pipe is arranged in a bent manner, and the gas holes are evenly distributed on the heating pipe and the heat preservation pipe.

In an embodiment of the present application, the intelligent heating device further includes:
a setting component provided with a display screen, the display screen is configured to display the temperature monitored by the electronic control component, the setting component is electrically connected to the electronic control component, and the setting component is configured to change maximum setting temperature and minimum setting temperature preset by the electronic control component.

The present application further includes an oven, including:
a shell; and
the intelligent heating device as described above, the intelligent heating device is provided in the shell. The intelligent heating device includes:
a gas pipe;
a burner connected to the gas pipe, wherein the burner has a heating mode and a heat preservation mode; and
an electronic control component for detecting a temperature of the burner and automatically controlling gas intake of the burner so that the burner enters the heating mode or the heat preservation mode.

The technical solutions of the present application provide an intelligent heating device and an oven. The intelligent heating device includes a gas pipe, a burner and an electronic control component. The burner is connected to the gas pipe, and the burner has a heating mode and a heat preservation mode. The electronic control component can monitor the temperature of the burner, and can control the amount of gas delivered to the burner by the gas pipe. When the electronic control component detects that the burner temperature is lower than the minimum set value, the electronic control component automatically increases the gas intake to put the burner into heating mode. When the electronic control component detects that the burner temperature reaches the maximum set value, the electronic control component automatically reduces the gas intake to put the burner into heat preservation mode, so that the burner can automatically maintain the temperature within the set range.

### BRIEF DESCRIPTION OF THE DRAWINGS

In order to more clearly illustrate the technical solutions in the embodiments of the present application or the related art, the drawings required for the embodiments or the related art will be briefly introduced below. Obviously, the drawings described below are only some embodiments of the present application. For ordinary technicians in this field, other drawings can be obtained based on the structures shown in these drawings without creative work.
FIG. 1 is a structural schematic view of an intelligent heating device according to an embodiment of the present application.
FIG. 2 is a structural schematic view of the intelligent heating device according to an embodiment of the present application.
FIG. 3 is a structural schematic view of an ignition part of the intelligent heating device according to an embodiment of the present application.
FIG. 4 is a cross-sectional structural view of a temperature sensor of the intelligent heating device according to an embodiment of the present application.
FIG. 5 is a structural schematic view of an oven according to an embodiment of the present application.
FIG. 6 is a structural schematic view of the oven according to another embodiment of the present application.

### Description of reference signs

| Reference sign | Name | Reference sign | Name |
|---|---|---|---|
| 100 | intelligent heating device | 221 | telescopic structure |
| 10 | burner | 23 | second electronic valve |
| 11 | heating pipe | 24 | ignition needle |
| 12 | heat preservation pipe | 25 | button |
| 13 | gas hole | 30 | gas pipe |
| 14 | ignition member | 40 | setting component |
| 141 | through hole | 41 | display screen |
| 20 | electronic control component | 200 | oven |
| 21 | first electronic valve | 210 | frying pan |
| 22 | temperature sensor | | |

The realization of the purpose, functional features and advantages of the present application will be further explained in conjunction with embodiments and with reference to the accompanying drawings.

### DETAILED DESCRIPTION OF THE EMBODIMENTS

The technical solutions of the embodiments of the present application will be described in more detail below with reference to the accompanying drawings. It is obvious that the embodiments to be described are only some rather than all of the embodiments of the present application. All other embodiments obtained by persons skilled in the art based on the embodiments of the present application without creative efforts shall fall within the scope of the present application.

It should be noted that if there is a directional indication (such as up, down, left, right, front, rear... ) in the embodiments of the present application, the directional indication is only used to explain the relative positional relationship, movement, etc. of the components in a certain posture (as shown in the drawings). If the specific posture changes, the directional indication will change accordingly.

It should be noted that, the descriptions associated with, e.g., "first" and "second," in the present application are merely for descriptive purposes, and cannot be understood as indicating or suggesting relative importance or impliedly indicating the number of the indicated technical feature. Therefore, the feature associated with "first" or "second" can expressly or impliedly include at least one such feature. In addition, the technical solutions between the various embodiments can be combined with each other, but they must be based on the realization of those of ordinary skill in the art. When the combination of technical solutions is contradictory or cannot be achieved, it should be considered that such a combination of technical solutions does not exist, nor is it within the scope of the present application.

The present application provides an intelligent heating device 100, which aims to enable a burner 10 to automatically maintain the temperature within a set range.

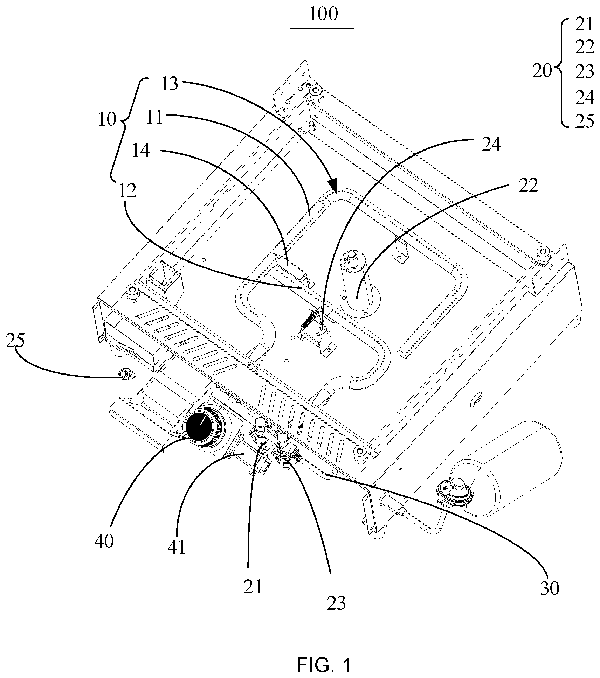

In an embodiment of the present application, as shown in FIG. 1 to FIG. 3, the intelligent heating device 100 includes a gas pipe 30, a burner 10 and an electronic control component 20. The burner 10 is connected to the gas pipe 30, and the burner 10 has a heating mode and a heat preservation mode. The electronic control component 20 is configured for detecting a temperature of the burner 10 and automatically controlling gas intake of the burner 10 so that the burner 10 enters the heating mode or the heat preservation mode.

It can be understood that the electronic control component 20 at least includes a temperature sensor 22 and a valve with an electric control function. In this embodiment, the temperature sensor 22 cannot directly detect the temperature of the burner 10. The temperature sensor 22 needs to detect the temperature of the frying pan 210 matched with the intelligent heating device 100 to indirectly measure the temperature of the burner 10. At the same time, the temperature sensor 22 can also have a telescopic function, so that the sensing end of the temperature sensor 22 is always in contact with the lower surface of the frying pan 210, so that the temperature sensor 22 can adapt to frying pans 210 of different heights. When the temperature sensor 22 detects that the temperature of the burner 10 is lower than the minimum set value, the valve electrically connected to the temperature sensor 22 will automatically expand to increase the gas intake, and the burner 10 enters the heating mode. When the temperature sensor 22 detects that the temperature of the burner 10 reaches the maximum set value, the valve electrically connected to the temperature sensor 22 will automatically shrink to reduce the gas intake, and the burner 10 enters the heat preservation mode.

The temperature of the burner 10 is monitored in real time through the electronic control component 20. The electronic control component 20 also controls the amount of gas delivered to the burner 10 by the gas pipe 30. When the temperature falls out of or exceeds a predetermined range, the gas intake of the burner 10 is automatically controlled to put the burner 10 into a heating mode or a heat preservation mode, so that the intelligent heating device 100 can automatically stabilize the temperature of the burner 10 within a predetermined range.

In some embodiments, the burner 10 is similar to a household stove. There are multiple gas burning holes on the burner 10. The burner 10 is connected to the gas pipe 30 through only one pipe. The temperature sensing device of the electronic control component 20 monitors the temperature of the burner 10. The valve is connected in series at the connection between the burner 10 and the gas pipe 30. When the temperature is lower than the minimum setting value, the valve is fully opened, the gas flow rate increases, and the fire of the burner 10 becomes larger to enter the heating mode. When the temperature reaches the maximum setting value, the valve is closed, the gas flow rate is reduced, and the fire of the burner 10 becomes smaller to enter the heat preservation mode. In this way, the structure of the burner 10 is simple, and the number of electronic control components 20 used is relatively small, which reduces the manufacturing cost.

In another embodiments, the burner 10 has multiple pipelines, all of which can burn gas, and each pipeline is connected to the gas pipe 30. The electronic control component 20 is provided with a valve at the connection between each pipeline and the gas pipe 30, so that the electronic control component 20 can more accurately adjust the fire size of the burner 10.

As shown in FIG. 1 to FIG. 3, in an embodiment, the burner 10 includes a heating pipe 11 and a heat preservation pipe 12. The heating pipe 11 is connected to the gas pipe 30. The electronic control component 20 is at least partially connected in series at the connection between the heating pipe 11 and the gas pipe 30 to control the flow rate of gas in the heating pipe 11. The heat preservation pipe 12 is connected to the gas pipe 30. The electronic control component 20 is at least partially connected in series at the connection between the heat preservation pipe 12 and the gas pipe 30 to control the flow rate of gas in the heat preservation pipe 12. The heating pipe 11 and the heat preservation pipe 12 start burning simultaneously, and the burner 10 enters the heating mode. Only the heat preservation pipe 12 starts burning, and the burner 10 enters the heat preservation mode.

In this way, the burner 10 includes a heating pipe 11 and a heat preservation pipe 12, and the electronic control component 20 is at least partially connected in series at the connection between the heating pipe 11 and the gas pipe 30. At the same time, the electronic control component 20 is also at least partially connected in series at the connection between the heat preservation pipe 12 and the gas pipe 30, so that the electronic control component 20 can control the amount of gas delivered by the gas pipe 30 to the heating pipe 11 or the heat preservation pipe 12. The heating mode is that the heating pipe 11 and the heat preservation pipe 12 are started at the same time, and only the heat preservation pipe 12 is started for the heat preservation mode, so that when the electronic control component 20 switches the mode, it only needs to control the gas flow in the heating pipe 11, which simplifies the control method of the electronic control component 20.

In some embodiments, in order to make the control method of the electronic control component 20 simpler, the electronic control component 20 has only conduction and blocking effects on the series connection between the heating pipe 11 and the gas pipe 30. When the electronic control component 20 is turned on, there is gas burning in the heating pipe 11. When the electronic control component 20 is blocked, there is no gas flowing in the heating pipe 11, and then the heating pipe 11 is turned off.

As shown in FIG. 1 to FIG. 3, in an embodiment, the electronic control component 20 includes a first electronic valve 21, a second electronic valve 23 and a temperature sensor 22. The first electronic valve 21 is provided at the connection between the gas pipe 30 and the heating pipe 11 to control the flow rate of the gas in the heating pipe 11. The second electronic valve 23 is provided at the connection between the gas pipe 30 and the heat preservation pipe 12 to control the flow rate of the gas in the heat preservation pipe 12. The temperature sensor 22 is configured for detecting the temperature of the burner 10, the temperature sensor 22 is electrically connected to the first electronic valve 21, and the temperature sensor 22 is electrically connected to the second electronic valve 23.

It can be understood that the gas pipe 30 is a general gas pipeline. The heating pipe 11 and the heat preservation pipe 12 are connected to the gas pipe 30 through two independent extension pipes that are not interconnected. The extension pipes do not participate in the combustion process. The gas pipe 30 transports gas to the heating pipe 11 and the heat preservation pipe 12 through the two extension pipes. The first electronic valve 21 is connected in series to the extension pipe of the heating pipe 11, and the second electronic valve 23 is connected in series to the extension pipe of the heat preservation pipe 12, so as to realize the independent control of the heating pipe 11 by the first electronic valve 21 and the independent control of the heat preservation pipe 12 by the second electronic valve 23.

In this way, the electronic control component 20 includes a first electronic valve 21, a second electronic valve 23 and a temperature sensor 22. The first electronic valve 21 controls the flow of gas in the heating pipe 11, and the second electronic valve 23 controls the flow of gas in the heat preservation pipe 12, so that the heating pipe 11 and the heat preservation pipe 12 are controlled by two independent electronic valves, avoiding the situation where when one control component controls two pipelines, the control effect may not meet the expected situation due to the structure or position of the control component.

In some embodiments, the first electronic valve 21 and the second electronic valve 23 can both adopt a solenoid valve structure. The valve is generally controlled by an electric, pneumatic, or hydraulic actuator to control the rotation or movement of the valve core to achieve the opening and closing of the valve. However, long-term operation of the valve stem will cause leakage of the dynamic seal. The solenoid valve is completed by using electromagnetic force to act on the iron core sealed in the magnetic isolation sleeve of the electric control valve. The solenoid valve has almost no leakage problem. Therefore, the solenoid valve is particularly suitable as a valve for the gas pipe 30 to avoid the risk of explosion caused by gas leakage.

In another embodiments, the temperature sensor 22 is further connected to a display screen 41, and the display screen 41 is disposed on the outside of the intelligent heating device 100. The display screen 41 can display the temperature monitored by the temperature sensor 22 in real time, so that the operator can know the temperature of the burner 10 in real time and adjust the operation according to the temperature.

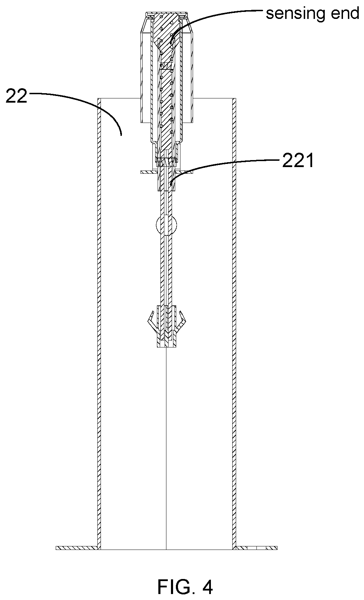

As shown in FIG. 1 to FIG. 4, in an embodiment, the temperature sensor 22 is provided with a telescopic structure 221, and the telescopic structure 221 is connected to a sensing end of the temperature sensor 22 to adjust a height of the sensing end of the temperature sensor 22.

In this way, the telescopic structure 221 is provided in the temperature sensor 22 and connected to the sensing end of the temperature sensor 22, so that the sensing end of the temperature sensor 22 can be adjusted in height by the telescopic structure 221, and further, the sensing end of the temperature sensor 22 can always abut against the bottom of the frying pan 210 when it is matched with frying pans 210 of different heights. The monitored temperature of the temperature sensor 22 is always closest to the actual temperature of the frying pan 210, thereby improving the monitoring accuracy of the temperature sensor 22.

In some embodiments, in order to make the telescopic structure 221 easier to operate, the telescopic structure 221 adopts a structure in which a push rod and a fixing member cooperate. The push rod is interference-fitted with the fixing member so that the push rod can pass through the fixing member and abut against the sensing end of the temperature sensor. By adjusting the height of the push rod, the height of the sensing end is indirectly adjusted, so that the temperature sensor 22 can adapt to frying pans 210 of different heights.

As shown in FIG. 1 to FIG. 3, in an embodiment, the burner 10 is provided with gas holes 13, the gas holes 13 are distributed on the heating pipe 11 and the heat preservation pipe 12 respectively, part of the gas holes 13 of the heat preservation pipe 12 are opposite to part of the gas holes 13 of the heating pipe 11, and when gas flows in the heating pipe 11, the heat preservation pipe 12 automatically ignites the heating pipe 11.

It can be understood that some of the gas holes 13 of the heat preservation pipe 12 are opposite to some of the gas holes 13 of the heating pipe 11. Since the gas holes 13 on the heat preservation pipe 12 are always burning, as long as the gas flow in the heating pipe 11 passes through the gas holes 13 opposite to the heat preservation pipe 12, it will be ignited by the flame of the heat preservation pipe 12, and then ignite the gas in the heating pipe 11.

In this way, the heating pipe 11 and the heat preservation pipe 12 realize gas combustion through the gas hole 13, similar to a household stove, making the combustion of gas safer.

In some embodiments, the gas holes 13 are densely arranged on the heating pipe 11 and the heat preservation pipe 12, respectively. The combustion of gas in a gas hole 13 is equivalent to a flame. When the gas holes 13 are densely arranged, a safe and stable flame can be formed, and the densely arranged gas holes 13 can also assist the self-ignition of the heating pipe 11. When the heating pipe 11 and the heat preservation pipe 12 are ignited relative to the gas hole 13, the gas hole 13 will ignite the adjacent gas hole 13, and then quickly ignite the entire heating pipe 11.

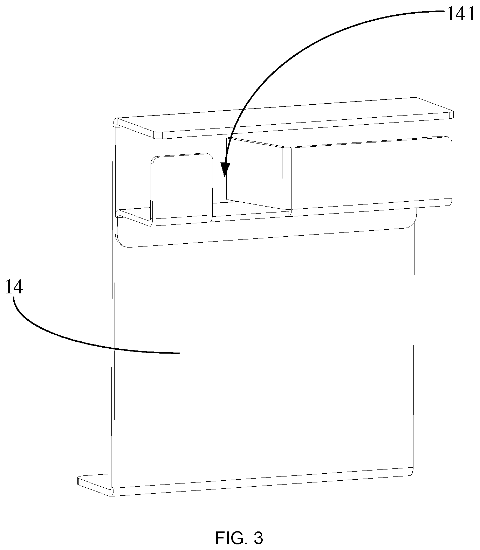

As shown in FIG. 3, in an embodiment, the burner 10 further includes an ignition member 14, and the ignition member 14 is provided with a through hole 141. Part of the gas holes 13 of the heat preservation pipe 12 are directly opposite to one end of the ignition member 14, part of the gas holes 13 of the heating pipe 11 are directly opposite to another end of the ignition member 14, and the gas of the heating pipe 11 is ignited by flame of the heat preservation pipe 12 through the through hole 141 of the ignition member 14.

In this way, the ignition member 14 is provided with a through hole 141, and some of the gas holes 13 of the heat preservation pipe 12 are opposite to one end of the ignition member 14, and some of the gas holes 13 of the heating pipe 11 are opposite to the other end of the ignition member 14. The ignition member 14 is responsible for directing the flame of the heat preservation pipe 12 to the heating pipe 11, so that the gas holes 13 of the heat preservation pipe 12 do not need to be opposite to the gas holes 13 of the heating pipe 11, and the ignition of the heating pipe 11 is safer.

In some embodiments, in order to prevent the through hole 141 of the ignition member 14 from being too long and causing the heat preservation pipe 12 to have difficulty in igniting the heating pipe 11, the through hole 141 of the ignition member 14 is in an "L" shape, and the two ends of the "L" are relatively close to each other, and the distance between the two ends is shortened as much as possible to prevent the heat preservation pipe 12 from igniting the heating pipe 11.

In other embodiments, since the ignition member 14 is always in a state of being burned by the heat preservation pipe 12, the ignition member 14 is made of high temperature resistant material to prevent the ignition member 14 from being burned to deformation, resulting in poor ignition effect.

As shown in FIG. 1, in an embodiment, the electronic control component 20 further includes an ignition needle 24 and a button 25. The ignition needle 24 is provided on the gas hole 13 of the heat preservation pipe 12, and the button 25 is electrically connected to the ignition needle 24 so that the ignition needle 24 ignites the gas in the heat preservation pipe 12.

In this way, the electronic control component 20 further includes an ignition needle 24 and a button 25, which are electrically connected. The ignition needle 24 is provided on the gas hole 13 of the heat preservation pipe 12. When the button 25 is pressed, the ignition needle 24 generates sparks to ignite the heat preservation pipe 12, and the heat preservation pipe 12 then ignites the heating pipe 11, so that only one ignition needle 24 is needed to achieve the ignition problem of the two pipelines.

In some embodiments, the ignition needle 24 adopts a pulse ignition method. The connection between the battery and the pulse ignition needle 24 is connected through the button 25. The pulse ignition can be realized by pressing the button 25, which makes the ignition method simpler and more durable. At the same time, the pulse ignition also has the characteristic of high ignition efficiency.

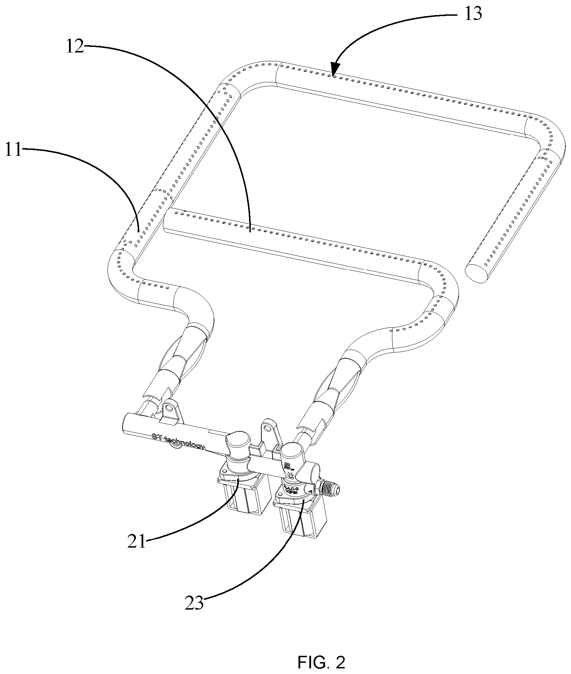

As shown in FIG. 1 and FIG. 2, in an embodiment, the heating pipe 11 is arranged in a zigzag manner, the heat preservation pipe 12 is arranged in a bent manner, and the gas holes 13 are evenly distributed on the heating pipe 11 and the heat preservation pipe 12.

In this way, the heating pipe 11 and the insulation pipe 12 are bent, and the pipeline is set to form a rectangular shape, so that the combustion holes arranged on the heating pipe 11 and the heat preservation pipe 12 are also rectangular in shape, so that the flame can output heat to the outside in a large range, ensuring that the heat output of the intelligent heating device 100 is uniform.

In some embodiments, the heating pipe 11 is longer than the heat preservation pipe 12 and surrounds a larger area. This allows the intelligent heating device 100 to increase the temperature of the burner 10 as much as possible when the heating pipe 11 is started. After the temperature of the burner 10 is increased over a large area, its overall temperature drops more slowly, thereby avoiding the situation where the heating pipe 11 is frequently ignited and extinguished.

In another embodiments, the heating pipe 11 and the heat preservation pipe 12 are arranged in a zigzag manner, so that the temperature sensor 22 is located in the middle surrounded by the heating pipe 11 and the heat preservation pipe 12. This position is the position where the burner 10 has the highest temperature and the temperature changes the slowest. The temperature sensor 22 is located at this position and can more accurately monitor whether the maximum temperature of the frying pan 210 is higher or lower than the set temperature range, so that the monitoring effect of the temperature sensor 22 is better.

As shown in FIG. 1, in an embodiment, the intelligent heating device 100 further includes a setting component 40 provided with a display screen 41. The display screen 41 is configured to display the temperature monitored by the electronic control component 20, the setting component 40 is electrically connected to the electronic control component 20, and the setting component 40 is configured to change maximum setting temperature and minimum setting temperature preset by the electronic control component 20.

It can be understood that the setting component 40 includes at least one manual setter and a circuit element with a memory function. When the manual setter sets the predetermined temperature, the circuit element changes its characteristics accordingly. At the same time, the circuit element is electrically connected to the temperature sensor 22. The temperature sensor 22 changes the temperature range of the electrical signal it sends to the electronic valve according to the characteristics of the circuit element, thereby realizing the setting of the predetermined temperature range by the setting component 40.

In this way, the predetermined temperature range of the intelligent heating device 100 is set through the setting component 40, so that the intelligent heating device 100 is not limited to the temperature range set at the factory, and the use scenario of the intelligent heating device 100 is expanded.

In some embodiments, the setting component 40 includes a knob, a display screen 41 and a circuit board. The circuit board is controlled by rotating the knob to adjust the predetermined temperature range of the temperature sensor 22. At the same time, the display screen 41 can also display the predetermined temperature range of the current temperature sensor 22 and the temperature of the burner 10 monitored by the current temperature sensor 22, so that the operator can adjust more intuitively and conveniently.

The present application further provides an oven 200, which includes a shell and an intelligent heating device 100. The specific structure of the intelligent heating device 100 refers to the above-mentioned embodiment. Since the oven 200 adopts all the technical solutions of all the above-mentioned embodiments, it has at least all the beneficial effects brought by the technical solutions of the above-mentioned embodiments, which will not be described one by one here.

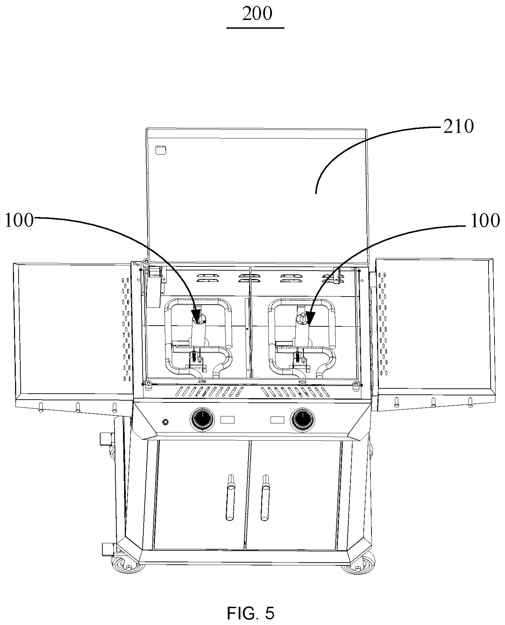

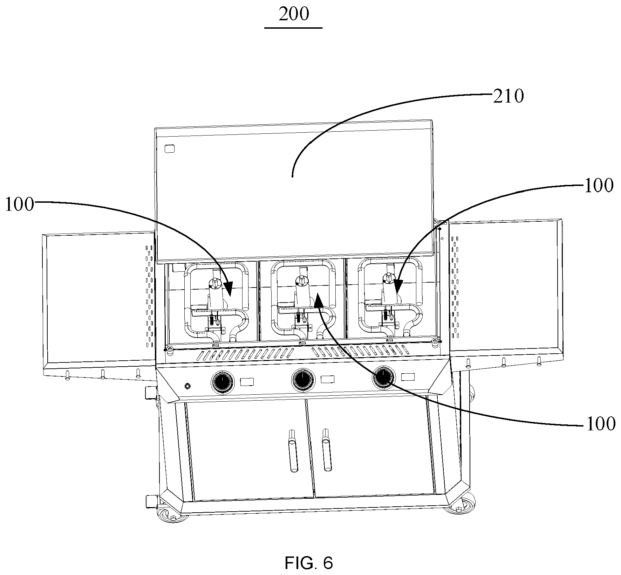

In some embodiments, as shown in FIG. 5 and FIG. 6, a plurality of intelligent heating devices 100 can be arranged inside the oven 200. The plurality of intelligent heating devices 100 are isolated by heat insulation boards, which are placed between the burners 10 of each intelligent heating device 100, and the combustion areas of the intelligent heating devices 100 are separated, which can avoid that each intelligent heating device 100 affects each other, resulting in a reduction in the heating effect of the intelligent heating device 100 on its main heating area, and it is also conducive to the separate use of each intelligent heating device 100 in the same oven 200.

The above description is only some embodiment of the present application, and does not limit the scope of the present application. All equivalent structural changes made by using the contents of the present application specification and drawings under the inventive concept of the present application, or directly/indirectly used in other related technical fields are included in the scope of the present application.

## Claims

1. An intelligent heating device, **characterized by** comprising:
a gas pipe (30);
a burner (10) connected to the gas pipe (30), wherein the burner (10) has a heating mode and a heat preservation mode; and
an electronic control component (20) for detecting a temperature of the burner (10) and automatically controlling gas intake of the burner (10) so that the burner (10) enters the heating mode or the heat preservation mode.

2. The intelligent heating device according to claim 1, wherein the burner comprises:
a heating pipe (11) connected to the gas pipe (30), the electronic control component being at least partially connected in series to a connection between the heating pipe (11) and the gas pipe (30) to control a flow rate of gas in the heating pipe (11); and
a heat preservation pipe (12) connected to the gas pipe (30), the electronic control component being at least partially connected in series to a connection between the heat preservation pipe and the gas pipe (30) to control a flow rate of gas in the heat preservation pipe;
wherein when the heating pipe (11) and the heat preservation pipe (12) start burning simultaneously, the burner enters the heating mode; when only the heat preservation pipe starts burning, the burner enters the heat preservation mode.

3. The intelligent heating device according to claim 2, wherein the electronic control component comprises:
a first electronic valve (21) provided at the connection between the gas pipe and the heating pipe to control the flow rate of the gas in the heating pipe;
a second electronic valve (23) provided at the connection between the gas pipe and the heat preservation pipe to control the flow rate of the gas in the heat preservation pipe; and
a temperature sensor (22) for detecting the temperature of the burner (10), wherein the temperature sensor (22) is electrically connected to the first electronic valve (21), and the temperature sensor (22) is electrically connected to the second electronic valve (23).

4. The intelligent heating device according to claim 3, wherein the temperature sensor (22) is provided with a telescopic structure (221), and the telescopic structure (221) is connected to a sensing end of the temperature sensor (22) to adjust a height of the sensing end of the temperature sensor (22).

5. The intelligent heating device according to claim 2, wherein the burner (10) is provided with gas holes, the gas holes are distributed on the heating pipe (11) and the heat preservation pipe (12) respectively, part of the gas holes of the heat preservation pipe (12) are opposite to part of the gas holes of the heating pipe, and when gas flows in the heating pipe (11), the heat preservation pipe (12) automatically ignites the heating pipe (11).

6. The intelligent heating device according to claim 5, wherein the burner further comprises:
an ignition member (14) provided with a through hole, wherein part of the gas holes of the heat preservation pipe (12) are directly opposite to one end of the ignition member (14), part of the gas holes of the heating pipe (11) are directly opposite to another end of the ignition member, and the gas of the heating pipe (11) is ignited by flame of the heat preservation pipe (12) through the through hole of the ignition member (14).

7. The intelligent heating device according to claim 5, wherein the electronic control component further comprises:
an ignition needle (24) provided on the gas hole of the heat preservation pipe; and
a button (25) electrically connected to the ignition needle (24) so that the ignition needle (24) ignites the gas in the heat preservation pipe (12).

8. The intelligent heating device according to claim 5, wherein the heating pipe (11) is arranged in a zigzag manner, the heat preservation pipe (12) is arranged in a bent manner, and the gas holes are evenly distributed on the heating pipe and the heat preservation pipe.

9. The intelligent heating device according to any one of claims 1 to 8, further comprising:
a setting component (40) provided with a display screen (41),
wherein the display screen (41) is configured to display the temperature monitored by the electronic control component (20), the setting component (40) is electrically connected to the electronic control component, and the setting component is configured to change maximum setting temperature and minimum setting temperature preset by the electronic control component.

10. An oven (200), **characterized by** comprising:
a shell; and
the intelligent heating device according to any one of claims 1 to 9, wherein the intelligent heating device is provided in the shell.
